# EUROPÄISCHE PATENTSCHRIFT

(11) **EP 0 956 467 B1**
(45) Veröffentlichungstag und Bekanntmachung des Hinweises auf die Patenterteilung: **08.05.2002**
(21) Anmeldenummer: 98904150.4
(22) Anmeldetag: 27.01.1998
(51) Int. Cl.: F16H 37/08

(54) **REIBRADGETRIEBE**
TOROIDAL DRIVE
BOITE DE VITESSES TOROIDALE

(30) Priorität: 31.01.1997 DE 19703544
(43) Veröffentlichungstag der Anmeldung: 17.11.1999
(73) Patentinhaber: ZF FRIEDRICHSHAFEN Aktiengesellschaft, 88038 Friedrichshafen (DE)
(72) Erfinder: KUHN, Walter, D-88045 Friedrichshafen (DE); WAFZIG, Jürgen, D-88097 Eriskirch (DE); GRUMBACH, Martin, D-88045 Friedrichshafen (DE)
(86) Internationale Anmeldenummer: EP9800432
(87) Internationale Veröffentlichungsnummer: WO9834051

(56) Entgegenhaltungen:
- EP-A- 0 043 184
- EP-A- 0 078 124
- EP-A- 0 120 636
- EP-A- 0 271 343
- WO-A-91/08406
- WO-A-96/35063
- DE-A- 2 807 971
- US-A- 5 194 052

## Beschreibung

Die Erfindung bezieht sich auf ein Getriebe, bei dem in einem ersten Leistungsbereich die Antriebsleistung von einer Antriebswelle auf eine Abtriebswelle über ein stufenlos verstellbares Getriebe mit paarweise zusammenwirkenden, toroidförmigen Laufflächen, zwischen denen Rollkörper laufen, übertragen wird und in einem zweiten Leistungsbereich über das stufenlose verstellbare Getriebe und ein Planetengetriebe übertragen wird.

Stufenlos verstellbare Getriebe mit einer An- und Abtriebswelle und einem Variator, bestehend aus zumindest zwei Torusscheiben mit toroidförmigen Laufflächen, zwischen denen Rollkörper abrollen, sind der Literatur in vielfachen Ausgestaltungen als bekannt zu entnehmen.

Die DE-A 28 07 971 zeigt ein einfach aufgebautes Reibradgetriebe mit einer An- und Abtriebswelle und zwei Scheiben, die zwischen sich Rollkörper aufnehmen. Die Rollkörper sind in Lagerungen gehaltert und können über eine axial verschiebbare Trommel verschwenkt werden. Auf diese Weise wird das Übersetzungsverhältnis verändert.

Beispiele für stufenlos verstellbare Getriebe mit zwei Leistungsbereichen bzw. Betriebsweisen sind den europäischen Patentschriften 0 043 184 und 0 078 124 als bekannt zu entnehmen. Bei dem Getriebe nach der EP-A 0 078 124 wird die Antriebsleistung in einem ersten Übersetzungsbereich über einen Wellenzug und einen Variator auf ein Summierungsgetriebe in Form eines Planetengetriebes geleitet. Je nach den herrschenden Drehzahlverhältnissen befindet sich das Getriebe in einem "geared neutral"-Zustand oder es werden Übersetzungsverhältnisse des Gesamtgetriebes für Rückwärts- und niedrige Vorwärtsgeschwindigkeiten erzeugt. In einem zweiten Übersetzungsbereich wird die Antriebsleistung über den Variatör direkt auf die Abtriebswelle übertragen. Dieses Getriebe hat den Nachteil, daß der Variator unter Leistungsverzweigung im ersten Leistungsbereich betrieben wird, so daß sich der Gesamtwirkungsgrad verschlechtert.

### (Einzufügen auf Seite 2, Zeile 9 der ursprünglichen Unterlagen.)

In der WO 96/35063 ist ein stufenlos verstellbares Getriebe in Form eines Umschlingungsvariators mit einem nachgeschalteten Planetengetriebe bekannt, wobei das Planetengetriebe koaxial zur Abtriebswelle des Umschlingungsgetriebes angeordnet ist. Das Getriebe ist in zwei Leistungsbereichen betreibbar; in einem ersten Leistungsbereich ist eine Kupplung innerhalb des Planetengetriebes geschlossen und das Planetengetriebe läuft als Einheit um. In dem zweiten Leistungsbereich ist eine weitere Kupplung, welche sowohl dem Variator als auch dem Planetengetriebe vorgeschaltet ist, geschlossen und das Planetengetriebe dient gleichfalls als Summiergetriebe.

Aus der gattungsbildenden WO 91/08406 ist ein weiteres stufenlos verstellbares Getriebesystem bekannt, welches im wesentlichen aus einem Variator mit paarweise zusammenwirkenden, toroidförmigen Laufflächen, zwischen denen Rollkörper laufen, und zwei konzentrisch zur Hauptwelle des Variators angeordneten Planetengetrieben besteht. Dieses Getriebe ist ebenfalls in zwei Leistungsbereichen betreibbar, wobei die Antriebsleistung von einer vorgeschalteten Antriebsmaschine direkt an die Hauptwelle des Variators übertragen wird.

### (Weiter auf Seite 2, Zeile 10 der ursprünglichen Unterlagen.)

Der vorliegenden Erfindung liegt die Aufgabe zugrunde, ein Getriebe der eingangs genannten Art, das in zwei Leistungsbereichen betrieben wird, hinsichtlich des erzielbaren Gesamtwirkungsgrades zu verbessern.

Diese Aufgabe wird mit einem, auch die kennzeichnenden Merkmale des Hauptanspruches aufweisenden, gattungsgemäßen Getriebes gelöst. Weitere vorteilhafte Abwandlungen und bauliche Ausgestaltungen des erfindungsgemäßen Getriebes sind den Ansprüchen 2 bis 6 zu entnehmen.

Weitere, für die Erfindung wesentliche Merkmale sowie die daraus resultierenden Vorteile sind der nachfolgenden Erläuterung des Ausführungsbeispiels des erfindungsgemäßen Getriebes zu entnehmen.

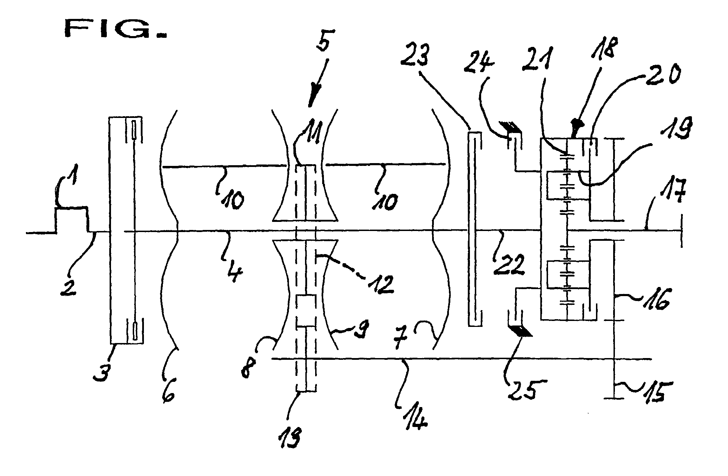

Es zeigt die einzige Figur ein Schema eines Getriebes, das in mehreren Leistungsbereichen betrieben werden kann.

Ein in der figur angedeuteter Motor 1 treibt eine Antriebswelle 2, die über ein Anfahrelement 3 mit einer Hauptwelle 4 eines stufenlosen Getriebes, im nachfolgenden Variator 5 genannt, verbindbar ist.

Das Anfahrelement ist als naßlaufende Lamellenkupplung ausgebildet.

Der Variator 5 ist ein Reibradgetriebe und verfügt über zwei äußere Torusscheiben 6 und 7, die paarweise mit inneren Torusscheiben 8 und 9 zusammenwirken. Zwischen den schematisch gezeichneten, toroidförmigen Laufflächen laufen mehrere Rollkörper 10, von denen in der Zeichnung lediglich zwei angedeutet sind.

Während die beiden äußeren Torusscheiben 6 und 7 drehfest mit der Hauptwelle 4 verbunden sind, sind die beiden inneren Torusscheiben 8 und 9 in bezug auf die Hauptwelle drehbar gelagert und mit einem Kettenrad 11 drehfest verbunden. Dieses steht über eine Antriebskette 12 mit einem weiteren Kettenrad 13 auf einer Seitenwelle 14 in Antriebsverbindung. Am - in der Zeichnung rechts liegenden - Ende der Seitenwelle 14 ist ein Zahnrad 15 drehfest angeordnet. Dieses Zahnrad 15 kämmt mit einem Zahnrad 16, das in bezug auf eine Abtriebswelle 17 drehbar angeordnet ist. Das Zahnrad 16 ist drehfest mit einem Getriebeglied eines Planetengetriebes 18, im vorliegenden Fall mit einem Steg 19, verbunden. Durch eine Kupplung 20 kann eine drehfeste Verbindung zwischen dem Zahnrad 16 und einem Hohlrad 21 hergestellt werden. Das Hohlrad 21 ist drehfest an eine Zwischenwelle 22 angeschlossen, die - ebenso wie die Abtriebswelle 17 -, koaxial zur Hauptwelle des Getriebes 4 liegt. Zwischen der Hauptwelle 4 und der Zwischenwelle 22 ist eine Kupplung 23 eingeschaltet. Ferner kann das Hohlrad 21 über eine Bremse 24 in bezug auf das Getriebegehäuse 25 festgebremst werden.

Das erläuterte Getriebe erlaubt einen Betrieb in verschiedenen Bereichen:

### Rückwärtsfahrt:

Durch Schließen der Bremse 24 bei geöffneten Kupplungen 20 und 23 wird die Drehrichtung der Abtriebswelle 17 umgekehrt zur Drehrichtung des Motors 1 eingestellt. Das Fahrzeug fährt mit hoher Übersetzung ins Langsame rückwärts, wenn das Anfahrelement 3 geschlossen wird. Hierbei kann der Variator 5 auf einer konstanten Übersetzung eingestellt bleiben oder auch verstellt werden.

### Neutralstellung:

Durch Öffnen der Kupplung 20 und geöffneter Bremse 24 ist die Abtriebswelle 17 gegenüber den übrigen Getriebeteilen frei drehbar. Es erfolgt keine Leistungsübertragung am Abtrieb. Wird zusätzlich noch das Anfahrelement 3 geöffnet, ist auch die Hauptwelle 4 gegenüber der Antriebswelle 2 (bzw. Kurbelwelle des Motors 1) frei drehbar.

### Erster Vorwärtsfahrbereich:

Das Planetengetriebe 18 wird durch Schließen der Kupplung 20 verblockt, so daß es als eine Einheit umläuft. Die Motordrehzahl wird über den Variator 5 und die (als Kettentrieb ausgebildete) erste Getriebestufe auf die Seitenwelle 14 übertragen. Von hier aus erfolgt eine weitere Übersetzung über die Zahnräder 15 und 16 (zweite Getriebestufe) auf das als Block umlaufende Planetengetriebe 18. Je nach Einstellung der Übersetzung des Variators 5 wird die Abtriebswelle 17 unterschiedlich schnell in Übereinstimmung mit der Drehrichtung des Motors 1 angetrieben. Die Übersetzung des Gesamtgetriebes kann stufenlos zwischen zwei Grenzübersetzungen des ersten Vorwärtsfahrbereiches eingestellt werden.

### Bereichswechsel:

Wird im ersten Vorwärtsfahrbereich die Endlage des Variators 5 mit seiner Übersetzung ins Schnelle erreicht, kann bei Bedarf eine synchrone Umschaltung zwischen dem ersten Vorwärtsfahrbereich und einem zweiten Vorwärtsfahrbereich und umgekehrt erfolgen. Dies setzt eine entsprechende Auslegung des Planetengetriebes 18 und der übrigen Getriebeelemente voraus. Der Bereichswechsel erfolgt durch Schließen der Kupplung 23 und gleichzeitiges Öffnen der Kupplung 20. Durch die Kupplungsbetätigung wird nunmehr eine Momentenverteilung über das Planetengetriebe 18 wirksam. Während des Bereichswechsels kehrt sich die Momentenrichtung am Variator 5 um. Die Drehrichtung wird beibehalten, während sich die Leistungsflußrichtung durch den Variator 5 umkehrt. Der Bereichswechsel kann durch eine Lastschaltung ohne Zugkrafteinbruch erfolgen.

### Zweiter Vorwärtsfahrbereich:

Nachdem ein Bereichswechsel, wie vorstehend erläutert, vollzogen wurde, fließt die Leistung - bezogen auf den ersten Vorwärtsfahrbereich - nun in umgekehrter Richtung durch den Variator 5. Diese Blindleistung addiert sich zur Motorleistung und fließt über die Haupt- und Zwischenwelle 4 bzw. 22 zurück zum Planetengetriebe 18. Die über den Variator 5 laufende Blindleistung ist variabel und hängt von der Übersetzung des Variators ab. Im Augenblick des Bereichswechsels laufen die Glieder des Planetengetriebes mit gleicher Drehzahl um. Wird nunmehr der Variator 5 aus seiner Endlage erneut verstellt, wird die Drehzahl des Stegs 19 des Planetengetriebes 18 kleiner als die Drehzahl des mit Motordrehzahl rotierenden Hohlrades 21. Hierdurch wird die Drehzahl der Abtriebswelle 17 gegenüber der Motordrehzahl erhöht. Dadurch wirkt die Gesamtübersetzung des Getriebes ins Schnelle. Auch hier kann die Übersetzung des Gesamtgetriebes zwischen zwei Grenzübersetzungen des zweiten Vorwärtsfahrbereiches stufenlos variiert werden.

Die Übersetzung im Planetengetriebe 18 und den übrigen Getriebeteilen kann so gewählt werden, daß im leistungsverzweigten Betrieb keine Blindleistung den Variator 5 durchläuft, die größer als die Motorleistung ist. Dies bedeutet insbesondere, daß nur ein Teil der Motorleistung mit einem relativ schlechten Wirkungsgrad durch den Variator 5 übertragen wird. Die Motorleistung und die über den Variator 5 zirkulierende Blindleistung wird an der Hauptwelle 4 addiert und über die geschlossene Kupplung 23 und die Zwischenwelle 22 an das Planetengetriebe 18 übertragen.

### Anfahren:

Das Anfahrelement 3 ist als nasse in Öl laufenden Reibungskupplung ausgestaltet. Anstelle des Anfahrelements 3 zwischen der Antriebswelle 2 und der Hauptwelle 4 des Getriebes kann auch die Kupplung 23 bzw. auch die Bremse 24, die zum Bereichs- und Richtungswechsel ohnehin vorhanden sein müssen, zum Anfahren eingesetzt werden.

In besonderen Fahrsituationen kann das Anfahrelement 3 in der Weise gesteuert werden, daß Schlupf auftritt. Dies kann sinnvoll sein, um Torsionsschwingungen im Antriebsstrang zu dämpfen.

Hinsichtlich des Variators 5 sei ergänzend angemerkt, daß dieser, wie gezeichnet, zwei Leistungszüge aufweist.

### Bezugszeichen

- 1: Motor
- 2: Antriebswelle
- 3: Anfahrelement
- 4: Hauptwelle
- 5: Variator
- 6: Torusscheibe
- 7: Torusscheibe
- 8: Torusscheibe
- 9: Torusscheibe
- 10: Rollkörper
- 11: Rad
- 12: Antriebskette
- 13: Kettenrad
- 14: Welle
- 15: Zahnrad
- 16: Zahnrad
- 17: Abtriebswelle
- 18: Planetengetriebe
- 19: Steg
- 20: Kupplung
- 21: Hohlrad
- 22: Zwischenwelle
- 23: Kupplung
- 24: Bremse
- 25: Getriebegehäuse

## Patentansprüche

1. Getriebe, bei dem die Antriebsleistung - in einem ersten Leistungsbereich - von einer Antriebswelle (2) auf eine Abtriebswelle (17) über ein stufenlos verstellbares Getriebe in Form eines Variators (5) mit einer Hauptwelle (4) und mit paarweise zusammenwirkenden, toroidförmigen Laufflächen (6 und 8 bzw. 7 und 9), zwischen denen Rollkörper (10) laufen, übertragen wird
und in einem zweiten Leistungsbereich über das stufenlos verstellbare Getriebe (5) und ein Planetengetriebe (18) übertragen wird,
wobei der erste Leistungsbereich einem ersten Vorwärtsfahrbereich entspricht, bei dem die Antriebsleistung über den Variator (5) auf die Abtriebswelle (17) übertragen wird und das Planetengetriebe (18) als Einheit umläuft,
und daß sich an den ersten Leistungsbereich der zweite Leistungsbereich anschließt, der einem Bereich höherer Vorwärtsfahrgeschwindigkeiten entspricht,
und daß der Variator (5) und das Planetengetriebe (18) in Axialrichtung hintereinander angeordnet sind
und daß der Ausgang des Variators über eine Antriebsverbindung (12) enthaltend eine Übersetzungsstufe mit einer Welle (14) verbunden ist, die mit einem Glied (19) des Planetengetriebes (18) trieblich verbunden ist,
**dadurch gekennzeichnet,**
**daß** dem Variator (5) ein Anfahrelement (3) vorgeschaltet ist, welches als naßlaufende Lamellenkupplung ausgebildet ist
und **daß** im Bereich höherer Vorwärtsfahrgeschwindigkeit die Antriebsleistung über das Planetengetriebe (18) auf die Abtriebswelle (17) übertragen wird, wobei im Planetengetriebe (18) eine Leistungsverzweigung erfolgt und eine Blindleistung über den Variator (5) zirkuliert, welche an der Hauptwelle (4) des Variators (5) zur Antriebsleistung addiert wird.

2. Getriebe nach Anspruch 1, **dadurch gekennzeichnet, daß** bei Erreichen der Endlage des Variators (5) mit einer Übersetzung ins Schnelle eine synchrone Umschaltung zwischen dem Bereich niedriger und dem Bereich hoher Vorwärtsfahrgeschwindigkeiten und umgekehrt erfolgt.

3. Getriebe nach Anspruch 1 oder 2, **dadurch gekennzeichnet, daß** zwischen einer Hauptwelle (4) des Variators (5) und einer Zwischenwelle (22), die mit dem Planetengetriebe (18) verbunden ist, eine Kupplung (23) eingeschaltet ist.

4. Getriebe nach einem der Ansprüche 1, 2 oder 3, **dadurch gekennzeichnet, daß** das Planetengetriebe (18) eine Kupplung (20) aufweist, die als Überbrückungskupplung wirkt.

5. Getriebe nach Anspruch 4, **dadurch gekennzeichnet, daß** das Planetengetriebe (18) eine Bremse (24) aufweist, mit der ein Glied (21) des Planetengetriebes (18) an einem Getriebegehäuse (25) festlegbar ist.

6. Getriebe nach Anspruch 5, **dadurch gekennzeichnet, daß** die Kupplungen (20, 23) und die Bremse (24) mit dem Planetengetriebe (18) baulich zusammengefaßt sind.

## Claims

1. Transmission, in which the input power - in a first power range - is transmitted from an input shaft (2) to an output shaft (17) via a continuously adjustable gear in the form of a variator (5) having a main shaft (4) and having cooperating pairs of toroidal races (6 and 8 and/or 7 and 9), between which rolling bodies (10) run,
and in a second power range is transmitted via the continuously adjustable gear (5) and a planetary gear (18),
wherein the first power range corresponds to a first forward travel range, in which the input power is transmitted via the variator (5) to the output shaft (17) and the planetary gear (18) rotates as a unit,
and that the first power range is followed by the second power range, which corresponds to a range of higher forward travel speeds,
and that the variator (5) and the planetary gear (18) are disposed one axially downstream of the other and that the output of the variator is connected by a drive connection (12) comprising a ratio step to a shaft (14), which is drive-connected to an element (19) of the planetary gear (18),
**characterized in**
**that** disposed upstream of the variator (5) is a starting element (3), which takes the form of a wet-operating disc clutch
and **that** in the range of higher forward travel speed the input power is transmitted via the planetary gear (18) to the output shaft (17), wherein in the planetary gear (18) a power distribution is effected and a reactive power circulates via the variator (5), which reactive power is added to the input power at the main shaft (4) of the variator (5).

2. Transmission according to claim 1, **characterized in that** on attainment of the end position of the variator (5) with a speed-increasing ratio a synchronous switchover is effected between the range of lower and the range of higher forward travel speeds and vice versa.

3. Transmission according to claim 1 or 2, **characterized in that** a clutch (23) is inserted between a main shaft (4) of the variator (5) and an intermediate shaft (22), which is connected to the planetary gear (18).

4. Transmission according to one of claims 1, 2 or 3, **characterized in that** the planetary gear (18) comprises a clutch (20), which acts as a lock-up clutch.

5. Transmission according to claim 4, **characterized in that** the planetary gear (18) comprises a brake (24), by means of which an element (21) of the planetary gear (18) is fixable to a transmission housing (25).

6. Transmission according to claim 5, **characterized in that** the clutches (20, 23) and the brake (24) are structurally combined with the planetary gear (18).

## Revendications

1. Transmission dans laquelle la puissance d'entraînement est transmise, dans une première gamme de puissance, d'un arbre d'entrée (2) à un arbre de sortie (17) par l'intermédiaire d'une transmission réglable en continu constituée d'un variateur (5) qui comprend un arbre principal (4) et des surfaces de roulement toroïdales (6 et 8, respectivement 7 et 9) coopérant par paires entre lesquelles roulent des corps roulants (10),
et, dans une deuxième gamme de puissance, par l'intermédiaire de la transmission (5) réglable par paliers, et d'une transmission épicycloïdale (18),
dans laquelle la première gamme de puissance correspond à une première gamme de marche avant dans laquelle la puissance d'entraînement est transmise à l'arbre de sortie (17) par l'intermédiaire du variateur (5) et où la transmission épicycloïdale (18) tourne comme un seul bloc,
la première gamme de puissance faisant suite à la deuxième gamme de puissance qui correspond à une gamme de grandes vitesses de marche avant,
le variateur (5) et la transmission épicycloïdale (18) étant disposés l'un à la suite de l'autre dans la direction axiale,
et la sortie du variateur étant reliée, par l'intermédiaire d'une liaison cinématique (12) comprenant un étage de rapport de transmission, à un arbre (14) qui est relié cinématiquement à un élément (19) de la transmission épicycloïdale (18)
**caractérisée**
**en ce qu'**en amont du variateur (5) est agencé un élément d'entrée (3) qui est constitué par un embrayage à disque travaillant dans un liquide,
et **en ce que**, dans la gamme des grandes vitesses de marche avant, la puissance d'entraînement est transmise à l'arbre de sortie (17) par l'intermédiaire de la transmission épicycloïdale (18), une ramification de puissance dans la transmission épicycloïdale (18) s'effectuant alors et une puissance apparente, ajoutée à la puissance d'entraînement sur l'arbre principal (4) du variateur (5). circulant à travers le variateur (5).

2. Transmission selon la revendication 1, **caractérisée en ce que**, lorsqu'on atteint la position extrême du variateur (5) qui donne une élévation du rapport de transmission, il se produit une commutation synchrone entre la gamme des petites vitesses de marche avant et la gamme des grandes vitesses de marche avant et inversement.

3. Transmission selon la revendication 1 ou 2, **caractérisée en ce qu'**un embrayage (23) est intercalé entre un arbre principal (4) du variateur (5) et un arbre intermédiaire (22) qui est relié à la transmission épicycloïdale (18).

4. Transmission selon l'une des revendications 1, 2 ou 3, **caractérisée en ce que** la transmission épicycloïdale (18) comprend un embrayage (20) qui se comporte comme un embrayage de prise directe.

5. Transmission selon la revendication 4, **caractérisée en ce que** la transmission épicycloïdale (18) comprend un frein (24) au moyen duquel un élément (21) de la transmission épicycloïdale (18) peut être bloqué par rapport à un carter (25) de la transmission.

6. Transmission selon la revendication 5, **caractérisée en ce que** les embrayages (20, 23) et le frein (24) sont assemblés, au niveau de la construction, à la transmission épicycloïdale (18).
